(19) Europäisches Patentamt

European Patent Office

Office européen des brevets

(11) **EP 0 845 548 B1**

(12) **EUROPEAN PATENT SPECIFICATION**

(45) Date of publication and mention
of the grant of the patent:
**16.05.2001 Bulletin 2001/20**

(51) Int Cl.⁷: **C23F 11/10**, C10M 141/06,
C10M 169/04, B29C 71/00
// B29K305:12

(21) Application number: **96202870.0**

(22) Date of filing: **15.10.1996**

(54) **Steel cord treated with a corrosion inhibiting composition**

Stahlseil behandelt mit einer korrosioninhibierende Zusammensetzung

Câble en acier traité avec une composition inhibitrice de la corrosion

(84) Designated Contracting States:
**BE DE FR IT NL**

(43) Date of publication of application:
**03.06.1998 Bulletin 1998/23**

(73) Proprietor: **N.V. BEKAERT S.A.**
**8550 Zwevegem (BE)**

(72) Inventors:
• **Vanbrabant, Johan**
 **B-8550 Zwevegem (BE)**
• **Deruyck, Frank**
 **B-9810 Nazareth (BE)**
• **van der Veer, Jan Marcel**
 **NL-1422 NL Uithoorn (NL)**
• **Mulder, Hendrik Laurens**
 **NL-3641 XV Mijdrecht (NL)**
• **Streefland, Gerardus Johannes Joseph**
 **NL-3581 XZ Utrecht (NL)**

(74) Representative: **Messely, Marc et al**
**N.V. Bekaert S.A.,**
**I.P.D.-4011,**
**Bekaertstraat 2**
**8550 Zwevegem (BE)**

(56) References cited:
DD-A- 118 668          FR-A- 1 426 943
GB-A- 742 468          GB-A- 1 177 873
GB-A- 1 364 781        US-A- 2 634 237
US-A- 2 890 170        US-A- 4 330 592
US-A- 5 156 759

• DATABASE WPI Section Ch, Week 9435 Derwent
 Publications Ltd., London, GB; Class A97, AN
 94-284337 XP002027896 & RU 2 009 188 C
 (GONCHAR V P) , 15 March 1994
• PATENT ABSTRACTS OF JAPAN vol. 015, no.
 133 (C-0820), 2 April 1991 & JP 03 017191 A
 (TOKAI RIKA CO LTD;OTHERS: 01), 25 January
 1991
• DATABASE WPI Section Ch, Week 7426 Derwent
 Publications Ltd., London, GB; Class A12, AN
 74-47967V XP002027897 & JP 49 021 299 B
 (YOKOHAMA RUBBER CO LTD) , 31 May 1974
• DATABASE WPI Section Ch, Week 8107 Derwent
 Publications Ltd., London, GB; Class H08, AN
 81-002465 XP002027898 & RO 68 531 A (INST
 TEHN RAFIN) , 26 November 1979

## Description

### Area of the invention

The invention relates to steel cords, covered with a coating of a material having an electrode potential, exceeding the electrode potential of steel or having a rate of corrosion, which is less than the rate of corrosion of steel and treated with a corrosion inhibiting composition.

### Background of the invention

Corrosion inhibiting compositions, typically in the form of solutions, suspensions or emulsions are commonly employed in the metal working industry to provide improved corrosion resistance of the metal objects involved. An example of such metal objects is steel cord, which is applied in rubber articles as metal reinforcement. Corrosion of steel cord may occur in the manufacturing process, during storage and transport of the steel cord as well as during and after the application of the steel cord in the rubber articles. In this respect it is remarked that always a certain amount of moisture is present in said rubber articles whereas additional moisture may penetrate the rubber articles by way of diffusion and in particular by way of hair cracks and other imperfections.

In the prior art many corrosion inhibiting compositions have been used. For instance, in DE-A 2,704,190 a method is disclosed for improving the corrosion resistance of steel cord coated with a Zn, brass or bronze layer by dipping it just long enough in a sodium nitrite or potassium nitrite solution for moistening to occur and then drying it at a temperature below 150°C.

Another method for providing corrosion protection to steel cord to be embedded in rubber articles like tires is disclosed in JP 02227304 A2. According to said document the tires have interior layers containing water-absorbing polymers and exterior layers of halobutyl rubbers.

Also it is known to apply a corrosion inhibiting composition, comprising specific reaction products like the product 6[2,4-bis(allylamino)-s-triazin-6-ylamino]-2-mercaptobenzothiazole as disclosed in Example 10(B) of EP 331279 A2 to brass coated steel cord.

GB- 1,364,781 A discloses a process for improving the adhesion of steel cord to rubber after vulcanisation thereof. According to this process the steel cord -prior to its use as reinforcing means in the rubber- is treated by dipping it in a mineral oil solution containing an organic acid salt of an aliphatic amine, containing from 12 to 22 carbon atoms. Examples of such organic salts are cocoanut monoamine salicylic acid salt, cocoanut monoamine acetic acid salt and beef tallow diamine salicylic salt. Further the mineral oil may contain further ingredients conventionally used to prevent discoloration of copper alloys, for example benzotriazole.

US-A 4,330,592 discloses a composite material of steel cords and rubber having an improved corrosion resistance and a rubber adhesion comprising on a surface of the steel cords a protecting layer of a rust preventing material comprising at least one surfactant like naphthenic acid or a salt of naphthenic acid such as the barium salt and at least one film-former like a hydrocarbon polymer or an oxide thereof having a softening or melting point of not less than 30°C before vulcanisation bonding of rubber to the steel cords.

RU 2,009,188 C (Derwent publication AN 94-284337) relates to a conservation-lubricant for e.g. lead-coated steel based on an emulsifier, containing mineral oil, polyethylene glycol ether of stearic acid with 6 moles of ethylene oxide, the product of oxyethylation of octadecyl alcohol with 20 moles of ethylene oxide, and the triethanolamine soap of 10-20 C synthetic fatty acids. For improving the results, the lubricant additionally contains mineral oil, benzotriazole and cobalt naphthenate.

As apparent from the above it is known from the prior art to apply corrosion inhibiting compositions to steel articles, in particular steel cord resulting in an improved corrosion resistance of the treated steel cord. However, such an improvement of the corrosion resistance may affect -after vulcanisation of the rubber- the adherence between the steel cord and the rubber comprising the steel cord as reinforcing means.

In view of the above the invention is directed to a steel cord covered with a coating and treated with a corrosion inhibiting composition which decreases the level of corrosion of the steel cord and hardly affects the adherence between the steel cord and rubber after vulcanisation thereof. Further the invention relates to a process for the manufacture of such a corrosion-resistant steel cord.

### Summary of the invention

The above aim is achieved by steel cords which are treated with a corrosion inhibiting composition, characterized in that it comprises

A) 65-86% by weight of an oil or wax as a carrier,

B1) 0.05-5 % by weight of an azole as a corrosion inhibitor,

B2) 4.9-20 % by weight of a co-corrosion-inhibitor comprising naphthenic acid or the alkaline, earth alkaline, ammonium or amine salt thereof,

C1) 0.05-5 % by weight of $C_{1-5}$ alcohols and/or $C_{1-5}$ glycols,

C2) 5-10 % by weight of a synthetic ester derived from a $C_{1-10}$ alcohol with 1-12 hydroxyl groups and $C_{6-24}$ fatty acids, and

C3) 4-11 % by weight of a $C_{6-18}$ alcohol.

The steel cord may be covered by a metal or plastic coating which, however, do not coat the steel object completely.

The benefits of using the corrosion inhibiting compositions on steel cord may be summarized as follows:

(a) the compositions impart steel cord, treated with these compositions, with adequate resistance against corrosion,

(b) the compositions impede adhesion of rubber to steel cord, treated with these compositions, after embedding said steel cord in rubber and subsequent vulcanising, to an acceptable level. The compositions do hardly interfere with the delicate physicochemical processes which anchors steel cord to rubber during vulcanisation; and

(c) after vulcanisation of rubber in which steel cord is embedded, the compositions according to the invention continue to impart to steel cord some degree of corrosion resistance.

Another object of the invention relates to a process for manufacturing a corrosion resistant steel cord comprising the following steps:

(a) covering the steel cord with a coating layer having an electrode potential exceeding the electrode potential of steel or having a rate of corrosion, which is less than the rate of corrosion of steel;

(b) drawing the steel cord up to the final diameter; and

(c) at least partly covering the steel cord with a corrosion inhibiting composition according to the invention.

A further object of the invention relates to rubber articles, provided with steel cord reinforcing means, treated with a composition used in the invention. Such reinforced rubber articles are for instance power transmission belts, conveyor belts, rubber hoses and tyres of any type.

Detailed description of the invention

**(A) THE COMPOSITIONS**

The components of the composition according to the invention can be elucidated by the following detailed description.

Carrier

The corrosion inhibiting compositions or corrosion preventives used in the invention typically contain one or more carriers. They are to be considered as the carriers of the active additives and more specifically the corrosion inhibitors. To a certain extent the carrier itself may have corrosion preventing properties, especially due to its hydrophobic character. Carriers may be of mineral, animal, vegetable or synthetic origin. By mixing non-polar with more polar compounds the solubility characteristics can be adjusted to allow the additives to be solubilized.

Carriers of mineral origin include mineral oils and waxes. Examples of mineral carriers useful in the invention include naphthenic and paraffinic oils and waxes. Mineral oils and waxes are commercially available from Exxon, Shell, and Sun oil companies.

Carriers of animal origin include natural fats and oils such as lard oil, sperm oil, and tallow. Renderings from meat and fish production are primary sources of such animal based lubricants.

Carriers of vegetable origin include cottonseed oil, corn oil, castor oil, rapeseed oil and tall oil. These oils may be produced directly, or may result as a byproduct of other processes such as the pulping of wood.

Carriers of synthetic origin include esters such as polyol esters. Typical synthetic esters which may serve as co-carriers of the present invention are inter alia described in U.S. Patent 3,526,596, and comprise the esters of fatty acids where the alcohol has 1 to 12 hydroxyl groups and the fatty acid has 6 to 24 carbon atoms. Other representative synthetic ester carriers are described in U.S. Patent 3,681,440 (the esters of organic monocarboxylic acids and dineoalkyl ethers with a tetrahydroxy functionality), U.S. Patent 4,178,261 (esters incorporating 6-cyclohexylhexanoic acid and a polyhydric alcohol), U.S. Patent 4,871,476 (esters of cyclohexanol or cyclohexanecarboxylic acid in combination with 1% to 70% by weight of a branched poly-$\alpha$-olefin), U.S. Patent 4,786,427 (diesters formed from dicarboxylic acids and monohydric compounds), U.S. Patent 4,978,468 (cyclohexyl esters in combination with from 0.1 to 95% by weight of a polymer selected from hydrocarbonic polymers and polyesters).

Other synthetic carriers useful for the present invention include polyolefin oils (synthetic hydrocarbon oils), polyether oils including polyoxyalkylene glycols, polyalkylene oxide-ester oils, hydrocarbon polymers, and mono- or poly-hydric alcohols having at least 5 carbon atoms.

Corrosion inhibitors

The corrosion inhibitor is selected from the families of the azoles. Illustrative azole-type corrosion inhibitors are benzotriazole, tolutriazole, the sodium salt of mercapto-benzotriazole, naphthotriazole, methylene bis-benzotriazole, dodecyltriazole and butylbenzotriazole, preferably tolutriazole. A suitable, commercially available form of benzotriazole which may be used in the invention is CORBRATEC®, marketed by PMC Specialties Group, Inc. (Rockey River, Ohio).

Co-corrosion inhibitors

The compounds incorporated into the composition used in the present invention, and serving to enhance the corrosion preventing properties of the composition are -as defined above- naphthenic acids or the alkaline, alkaline-earth, ammonium and amine salts thereof.

Naphthenic acids are marketed products having the CAS Registry Number 64754-89-8 and 1338-24-5. More in particular naphthenic acids represent a complex combination of compounds. Said acids contain carboxylic acid functional groups and five- to six-member naphthenic rings in their molecular structure. Preferably the naphthenic acid is a naphthenic-13 acid, preferably in the barium salt form.

A class of compounds which may further be incorporated into the composition used in the present invention, and which serve to enhance the corrosion preventing properties of the composition are imidazolines, having a $C_{6-24}$ alkyl moiety. For instance imidazoline phosphate esters having a $C_{6-24}$ alkyl group may be used.

Still another class of compounds which may be further incorporated into the composition used in the present invention, and which serve to enhance the corrosion preventing properties of the composition are $C_{6-24}$ alkylsuccinic anhydrides, like undecyl, dodecyl and tridecyl succinic anhydride or mixtures thereof.

$C_{1-5}$ alcohols and $C_{1-5}$ alkylglycols are part of the composition to support the action of the corrosion inhibitors by preventing the presence of water at the steel/rubber interface. A suitable $C_{1-5}$ alkylglycols is butyldiethyleneglycol (= 2-(butoxy-ethoxy)ethanol), having the CAS-number 112-34-5.

Synthetic esters

Synthetic esters are applied for providing a good corrosion inhition rating but more in particular for decreasing the adherence loss rating to a minimum. Said synthetic esters are derived from $C_{1-10}$ alcohols with 1-12 hydroxyl groups and $C_{6-24}$ fatty acids. Examples of such esters are the esters of neopentylglycol and $C_{8-18}$ technical fatty acids and the esters of neopentylglycol and cocos fatty acids.

$C_{6-18}$ alcohols

$C_{6-18}$ alcohols are also applied for providing a good corrosion inhibition rating and a minimal adherence loss rating. Preferably technical alcohol mixtures like $C_{12-13}$ technical alcohol are used.

The composition used in the present invention may contain further additives. Examples thereof are mentioned below.

Stabilizers

Stabilizers might be needed to impart sufficient storage stability of the composition used in the present invention. Some components have limited solubility in the carrier which may result in separation of these components from the composition during storage or use. Esters and natural or synthetic fatty alcohols may be applied to overcome this.

Anti-oxidants

The composition used in the present invention may also contain one or more antioxidants for improving the storage life of the compositions. Suitable aromatic amine antioxidants include phenothiazine, iminodibenzyl, diphe-

nylamine, phenyl-$\alpha$-naphthylamine and phenyl-$\beta$-naphthylamine. Particularly suited are the alkylated aromatic amines.

When an antioxidant is present in the composition, the antioxidant preferably ranges up to about 0.5% by weight of the total weight of the composition. More preferably the antioxidant is present in an amount of about 0.1 to about 0.3% by weight.

## (B) THE FIGURES

The invention will be elucidated by means of the following two figures:

Fig. 1 illustrates a schematic view of the method according to which the corrosion inhibiting composition according to the invention is applied on a steel filament;
Fig. 2 illustrates an electric equivalent circuit, applied for corrosion studies.

## (C) APPLICATION OF THE COMPOSITION ON STEEL CORD AND THE MEASUREMENT OF THE RELEVANT PROPERTIES.

A steel cord used in the process according to the invention is manufactured as follows.

Starting from a marketed rod wire, the wire is drawn in several phases until an intermediate diameter is reached. After reaching the intermediate diameter the wire is electrolytically coated with copper and subsequently with zinc, after which a thermodiffusion occurs resulting in a brass coating around the wire. Typically the brass coating has a copper content between 60 and 70% by weight. The wire, having the intermediate diameter is normally completely coated with the brass coating layer. Then the wire having the intermediate diameter is drawn to a smaller final diameter, normally by means of wet-drawing machines. During the wet-drawing the brass coating layer becomes successively porous: the coating layer becomes thinner and thinner and shows local cracks where the steel comes to the surface.

The porosity may be expressed in a quantitative way as the percentage of iron coming to the surface next to the brass coating layer, and can be determined according to Notter I.M., Gabe D.R. and Warwick M.E.,. "Polarization resistance methods for measurement of the porosity of tin coatings on steel", Trans. IMF 1986, 64, 105-109, and according to Notter I.M. and Gabe D.R., "Porosity of electrodeposited coatings: its cause, nature, effect and management", Corr.Rev. 10, 1992 3/4, 217-280. Porosity values of hard drawn steel cords may vary between 2 and 25%, for instance between 3 and 20%.

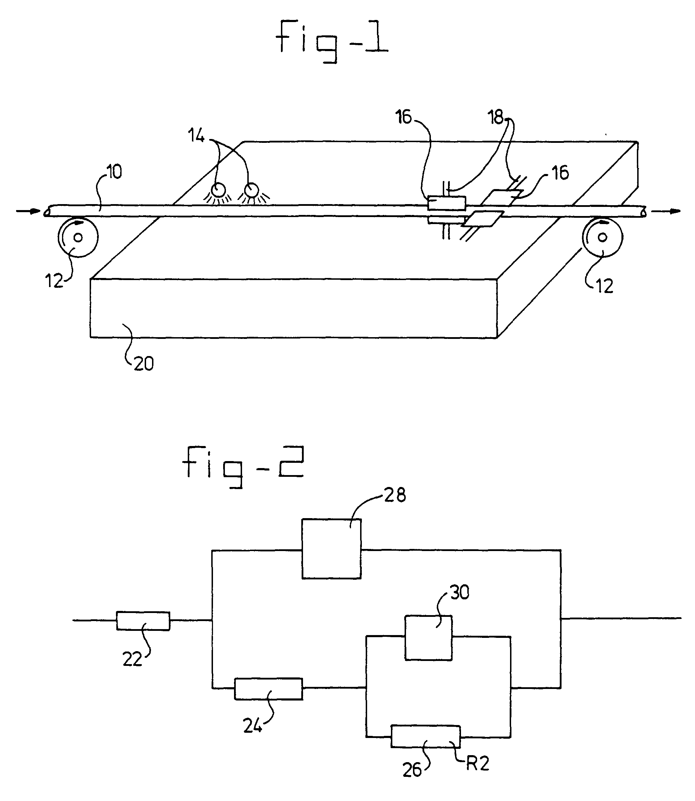

Subsequently the wire, having its final diameter, is covered with the corrosion inhibiting composition according to the invention, as illustrated in Fig. 1. Wire 10 follows a straight path over guiding wheels 12. From one or more tubes 14 which are provided with holes the corrosion inhibiting composition is dripped on the wire. Somewhat further, downstream, the excess of corrosion inhibiting composition is removed by means of for instance a felt material 16, which is pressed at several sides against wire 10 by means of rods 18. The felt material 16 may be saturated with the corrosion inhibiting composition. After the wiping action by the felts the wire can be dried in a furnace. Recuperation of the corrosion inhibiting composition which drips from the wire 10 or from the felt material 16 may occur by using a recuperation bath 20. Then several wires are twined to a steel cord. Finally the steel cord is wound on a coil for storage and transportation purposes.

The covering with the corrosion inhibiting composition used in the present invention may also be done after having twisted the wires to a steel cord.

The corrosion behaviour of steel cord covered with a corrosion inhibiting composition used in the present invention is simulated and determined according to the standard procedure: "Corrosion tests and standards: application and interpretation, ASTM MNL 20, pp. 86-88, ASTM G3-89, ASTM G5-82, ASTM G15-85a and ASTM STP 727 and by means of the so-called gel test, which has been described in EP-A-0 290 086. In this gel test the steel cord is used as working electrode in an electrochemical cell comprising reference electrodes. An electric current having changing frequencies is applied to the electrochemical cell and per applied frequency the amplitude and phase of the resulting electric voltage is determined.

For analysis of the dynamic corrosion behaviour the electric equivalent circuit according to Fig. 2 is used. In this figure the elements 22, 24 and 26 represent electric resistors (impedance values having only a real part) and elements 28 and 30 represent elements having a constant phase.

The major value in this equivalent circuit is the value of the electric resistor 26 ($R_2$). The higher the value of this resistor, the longer the corrosion resistance of the tested steel cord. Another parameter, next to the resistance value of electric resistor 26, which is used for the determination of the corrosion resistance, is the so-called "inhibition rating" as defined in "Compendium of Chemical Terminology", IUPAC Recommendations, Blackwell Scientific Publications, 1987, p. 198:

$$I = (V_o - V)/V_o$$

wherein

I    represents the corrosion inhibition rating (in percent);
$V_o$   represents the corrosion rate of a non-treated steel cord with $V_o = 1/R_2$
V    represents the corrosion rate of a treated steel cord with $V=1/R_2$
$R_2$   is the resistance value of electric resistor 22.

The other important property i.e. the adherence between the rubber and a steel cord treated according to the invention is determined as follows. A non-treated steel cord, together with a treated steel cord is embedded in an industrial rubber composition which is subsequently vulcanized. Both steel cords are pulled out from the vulcanized rubber and the forces necessary therefore are measured and compared resulting in the "adherence loss rating."

With respect to the above defined ratings the following ranges are given:

| corrosion inhibition rating | >60% | good |
|---|---|---|
| | 50-60% | good to moderate |
| | <50% | moderate to poor |
| adherence loss rating | <4% | good |
| | 4-6% | good to moderate |
| | 6-10% | moderate |
| | >10% | poor. |

The invention is illustrated by the following examples but is not in any way limited thereto. If not indicated otherwise the % in the composition are wt %.

Example 1

A steel cord is manufactured and treated in the above-defined way with a corrosion inhibiting composition used in the present invention composed of the following components:

| Mineral seal oil | 72.9 % |
|---|---|
| Ester of neopentyl glycol and cocos fatty acids | 10.0% |
| Naphthenic Acid 13, Barium Soap | 9.8 % |
| C12-C13 technical alcohol | 5.0 % |
| Butyldiethyleneglycol | 1.3 % |
| Tolutriazole | 0.16 % |
| Alkylated diphenol | 0.13 % |
| Sulphurized DTBP | 0.33 % |
| Octyl diphenylamine | 0.33 % |
| Total | 100 % |

Corrosion inhibition rating, if compared with non-treated reference: + 35%
Adherence loss rating, if compared with non-treated reference: 4.9%

Example 2

In this Example a series is shown in which a certain range of concentration of synthetic ester/alchol minimises the adherence loss. This synergy cannot be expected from the state of the art. On the other hand, corrosion inhibition decreases with increasing ester/alcohol concentration. Hence the preferred composition B is a compromise.

| A. Low ester/alcohol content | |
|---|---|
| Mineral oil | 78.5% |
| Naphtenic acid, Ba salt | 10 % |
| Tolutriazol | 0,2% |
| Synthetic ester* | 5 % |
| C12-13 Technical alcohol | 5 % |
| Butyldiethyleneglycol | 1.3% |
| | |
| Corrosion inhibition rating, if compared with non-treated reference | 70% |
| Adherence loss rating, if compared with non-treated reference | 2% |
| B. Preferred composition - minimal adherence loss | |
| Mineral oil | 73.5% |
| Naphtenic acid, Ba salt | 10 % |
| Tolutriazol | 0.2% |
| Synthetic ester* | 10 % |
| C12-13 Technical alcohol | 5 % |
| Butyldiethyleneglycol | 1.3% |
| Corrosion inhibition rating, if compared with non-treated reference | 62 % |
| Adherence loss rating, if compared with non-treated reference | <1 % |
| C. High amount of ester/alcohol (Comparative example) | |
| Mineral oil | 68.5% |
| Naphtenic acid, Ba salt | 10 % |
| Tolutriazol | 0.2% |
| Synthetic ester* | 15 % |
| C12-13 Technical alcohol | 5 % |
| Butyldiethyleneglycol | 1.3 % |
| | |
| Corrosion inhibition rating, if compared with non-treated reference | 59% |
| Adherence loss rating, if compared with non-treated reference | 4% |

*Synthetic ester: ester of neopentylglycol and C8-18 technical fatty acids.

**Claims**

1. A steel cord covered with a coating layer having an electrode potential exceeding the electrode potential of steel or having a rate of corrosion which is lower than the rate of corrosion of steel, treated with a corrosion inhibiting composition, characterized in that said composition comprises

   A) 65-86% by weight of an oil or wax as a carrier,
   B1) 0.05-5 % by weight of an azole as a corrosion inhibitor,
   B2) 4.9-20 % by weight of a co-corrosion-inhibitor comprising naphthenic acid or the alkaline, earth alkaline, ammonium or amine salt thereof,
   C1) 0.05-5 % by weight of $C_{1-5}$ alcohols and/or $C_{1-5}$ glycols,
   C2) 5-10 % by weight of a synthetic ester derived from a $C_{1-10}$ alcohol with 1-12 hydroxyl groups and $C_{6-24}$ fatty acids, and
   C3) 4-11 % by weight of a $C_{6-18}$ alcohol.

2. A steel cord according to claim 1, **characterized in that** the carrier in said composition is selected from oils and waxes of mineral, animal, vegetable and synthetic origin.

3. A steel cord according to claim 2, **characterized in that** the carrier in said composition is of synthetic origin.

**4.** A steel cord according to claim 2, **characterized in that** the carrier in said composition is mineral oil.

**5.** A steel cord according to any of the claims 1-4, **characterized in that** the azole in said composition is an aromatic triazole compound.

**6.** A steel cord according to claim 5, **characterized in that** the azole in said composition is tolutriazole.

**7.** A steel cord according to any of the claims 1-6 wherein the co-corrosion inhibitor further comprises fatty acids having 6-24 carbon atoms or aromatic acids, which acids have the free acid form or the salt form.

**8.** A steel cord according to any of the claims 1-7 wherein the co-corrosion inhibitor further comprises imidazoline derivatives having an $C_{6-24}$ alkyl moiety.

**9.** A steel cord according to any of the claims 1-8 wherein the co-corrosion inhibitor further comprises $C_{6-24}$ alkylsuccinic anhydride compounds.

**10.** A steel cord according to claim 1, **characterized in that** in said composition the naphthenic acid salt is a naphthenic-13-barium salt.

**11.** A steel cord according to any of claims 8-10, **characterized in that** in said composition the imidazoline derivatives are selected from the group consisting of imidazoline phosphate esters having a $C_{6-24}$ alkyl group.

**12.** A steel cord according to any of the claims 9-12, **characterized in that** in said composition the $C_{6-24}$ alkyl succinic anhydride is selected from the group consisting of undecyl, dodecyl and tridecyl succinic anhydride or mixtures thereof.

**13.** A steel cord according to claim 1, **characterized in that** in said composition the $C_{1-5}$ alkylglycol is butyldiethyl-eneglycol.

**14.** A steel cord according to any of the claims 1-13, **characterized in that** the synthetic ester in said composition is the ester of neopentyl glycol and cocos fatty acids.

**15.** A steel cord according to any of the claims 1-13, **characterized in that the** synthetic ester in said composition is the ester of neopentyl glycol and $C_{8-18}$ technical fatty acids.

**16.** A steel cord according to any of the claims 1-15, **characterized in that** the $C_{8-16}$ alcohol in said composition is a $C_{12-13}$ technical alcohol..

**17.** A steel cord according to any of the claims 1-16, **characterized in that** the coating layer is a metallic layer.

**18.** A steel cord according to any of the claims 1-17, **characterized in that** the steel cord is partly covered with the coating layer.

**19.** A steel cord according to claim 18, **characterized in that** the steel cord is not covered for 2-25% by weight with the coating layer.

**20.** A process for the manufacture of a corrosion-resistant steel cord comprising the steps of

a) drawing an elongated steel wire to an intermediate diameter;
b) applying a coating layer having an electrode potential exceeding the electrode potential of steel or having a rate of corrosion which is lower than the rate of corrosion of steel, on the elongated steel object having the intermediate diameter;
c) drawing the elongated steel wire to the final diameter, and
d) applying the corrosion-inhibiting composition defined in the claims 1-16 on the drawn elongated steel object having the final diameter.

**21.** A process according to claim 20 wherein two or more drawn elongated wires are twisted into a cord structure prior to the application of the corrosion inhibiting composition.

**EP 0 845 548 B1**

**Patentansprüche**

1. Stahlseil, das mit einer Beschichtung beschichtet ist, deren Elektrodenpotential das Elektrodenpotential von Stahl überschreitet oder deren Korrosionsrate niedriger ist als die Korrosionsrate von Stahl, behandelt mit einer korrosionshemmenden Zusammensetzung, **dadurch gekennzeichnet,** daß die Zusammensetzung umfaßt:

   A) 65 - 86 Gew.-% eines Öls oder Wachses als Träger,
   B1) 0,05 - 5 Gew.-% eines Azols als Korrosionshemmstoff,
   B2) 4,9 - 20 Gew.-% eines Co-Korrosionshemmstoffs, der Naphthensäure oder das alkalische, erdalkalische, Ammonium-oder Aminsalz davon enthält,
   C1) 0,05 - 5 Gew.-% $C_{1-5}$-Alkohole und/oder $C_{1-5}$-Glykole,
   C2) 5 - 10 Gew.-% eines synthetischen Esters, hergeleitet von einem $C_{1-10}$-Alkohol mit 1 - 12 Hydroxylgruppen und $C_{6-24}$-Fettsäuren, und
   C3) 4 - 11 Gew.-% eines $C_{6-18}$-Alkohols.

2. Stahlseil nach Anspruch 1, **dadurch gekennzeichnet**, daß der Träger in der Zusammensetzung aus Ölen und Wachsen mineralischen, tierischen, pflanzlichen und synthetischen Ursprungs gewählt ist.

3. Stahlseil nach Anspruch 2, **dadurch gekennzeichnet,** daß der Träger in der Zusammensetzung synthetischen Ursprungs ist.

4. Stahlseil nach Anspruch 2, **dadurch gekennzeichnet,** daß der Träger in der Zusammensetzung Mineralöl ist.

5. Stahlseil nach einem der Ansprüche 1 bis 4, **dadurch gekennzeichnet,** daß das Azol in der Zusammensetzung eine aromatische Triazolverbindung ist.

6. Stahlseil nach Anspruch 5, **dadurch gekennzeichnet,** daß das Azol in der Zusammensetzung Tolutriazol ist.

7. Stahlseil nach einem der Ansprüche 1 bis 6, wobei der Co-Korrosionshemmstoff ferner Fettsäuren mit 6 bis 24 Kohlenstoffatomen oder aromatische Säuren enthält, welche Säuren die freie Säureform oder die Salzform besitzen.

8. Stahlseil nach einem der Ansprüche 1 bis 7, wobei der Co-Korrosionshemmstoff ferner Imidazolin-Derivate mit einer $C_{6-24}$-Alkylkomponente enthält.

9. Stahlseil nach einem der Ansprüche 1 bis 8, wobei der Co-Korrosionshemmstoff ferner $C_{6-24}$-Alkyl-Bernsteinsäureanhydrid-Verbindungen enthält.

10. Stahlseil nach Anspruch 1, **dadurch gekennzeichnet,** daß in der Zusammensetzung das Naphthensäuresalz ein Naphthen-13-Bariumsalz ist.

11. Stahlseil nach einem der Ansprüche 8 bis 10, **dadurch gekennzeichnet,** daß in der Zusammensetzung die Imidazolinderivate aus der Gruppe gewählt sind, die aus Imidazolinphosphatestern mit einer $C_{6-24}$-Alkylgruppe besteht.

12. Stahlseil nach einem der Ansprüche 9 bis 12, **dadurch gekennzeichnet,** daß in der Zusammensetzung das $C_{6-24}$-Alkyl-Bernsteinsäureanhydrid aus der Gruppe gewählt ist, die aus Undecyl-, Dodecyl- und Tridecyl-Bernsteinsäureanhydrid oder Gemischen davon besteht.

13. Stahlseil nach Anspruch 1, **dadurch gekennzeichnet,** daß in der Zusammensetzung das $C_{1-5}$-Alkylglykol Butyldiethylenglykol ist.

14. Stahlseil nach einem der Ansprüche 1 bis 13, **dadurch gekennzeichnet,** daß der synthetische Ester in der Zusammensetzung der Ester von Neopentylglykol und Kokosfettsäuren ist.

15. Stahlseil nach einem der Ansprüche 1 bis 13, **dadurch gekennzeichnet,** daß der synthetische Ester in der Zusammensetzung der Ester von Neopentylglykol und technischen $C_{8-18}$-Fettsäuren ist.

**16.** Stahlseil nach einem der Ansprüche 1 bis 15, **dadurch gekennzeichnet,** daß der $C_{8-16}$-Alkohol in der Zusammensetzung ein technischer $C_{12-13}$-Alkohol ist.

**17.** Stahlseil nach einem der Ansprüche 1 bis 16, **dadurch gekennzeichnet,** daß die Beschichtung eine metallische Schicht ist.

**18.** Stahlseil nach einem der Ansprüche 1 bis 17, **dadurch gekennzeichnet,** daß das Stahlseil mit der Beschichtung teilweise beschichtet ist.

**19.** Stahlseil nach Anspruch 18, **dadurch gekennzeichnet,** daß das Stahlseil für 2 - 25 Gew.-% nicht mit der Beschichtung beschichtet ist.

**20.** Verfahren zur Herstellung eines korrosionsbeständigen Stahlseils, welches die Schritte aufweist

a) Ziehen eines langgestreckten Stahldrahts zu einem Zwischendurchmesser;
b) Auftragen einer Beschichtung, deren Elektrodenpotential das Elektrodenpotential von Stahl überschreitet oder deren Korrosionsrate niedriger ist als die Korrosionsrate von Stahl, auf das langgestreckte Stahlobjekt mit dem Zwischendurchmesser;
c) Ziehen des langgestreckten Stahldrahts auf den Enddurchmesser, und
d) Auftragen der korrosionshemmenden Zusammensetzung, die in den Ansprüchen 1 bis 16 definiert ist, auf das gezogene langgestreckte Stahlobjekt mit dem Enddurchmesser.

**21.** Verfahren nach Anspruch 20, wobei zwei oder mehr gezogene langgestreckte Drähte vor dem Auftragen der korrosionshemmenden Zusammensetzung zu einer Seilstruktur verdreht werden.

## Revendications

**1.** Câble en acier recouvert d'une couche de revêtement ayant un potentiel d'électrode excédant le potentiel d'électrode de l'acier ou ayant une vitesse de corrosion qui est inférieure à la vitesse de corrosion de l'acier, traité avec une composition inhibitrice de la corrosion, **caractérisé en ce que** ladite composition comprend :

A) 65 à 86 % en poids d'une huile ou d'une cire comme véhicule,
B1) 0,05 à 5 % en poids d'un azole comme inhibiteur de corrosion,
B2) 4,9 à 20 % en poids d'un co-inhibiteur de corrosion contenant de l'acide naphténique ou un sel d'un alcalin, d'un alcalino-terreux, d'ammonium ou d'amine de celui-ci, C1) 0,05 à 5 % en poids d'alcools en $C_{1-5}$ et/ou de (alkyl $C_{1-5}$) glycols
C2) 5 à 10 % en poids d'un ester synthétique dérivé d'un alcool en $C_{1-10}$ comportant 1 à 12 groupes hydroxyle et d'acides gras en $C_{6-24}$, et
C3) 4 à 11 % en poids d'un alcool en $C_{6-18}$.

**2.** Câble en acier selon la revendication 1, **caractérisé en ce que** le véhicule présent dans ladite composition est choisi parmi les huiles et cires d'origine minérale, animale, végétale et synthétique.

**3.** Câble en acier selon la revendication 2, **caractérisé en ce que** le véhicule présent dans ladite composition est d'origine synthétique.

**4.** Câble en acier selon la revendication 2, **caractérisé en ce que** le véhicule présent dans ladite composition est une huile minérale.

**5.** Câble en acier selon l'une quelconque des revendications 1 à 4, **caractérisé en ce que** l'azole présent dans ladite composition est un composé du type triazole aromatique.

**6.** Câble en acier selon la revendication 5, **caractérisé en ce que** l'azole présent dans ladite composition est du tolutriazole.

**7.** Câble en acier selon L'une quelconque des revendications 1 à 6, dans lequel le co-inhibiteur de corrosion comprend également

des acides gras comportant 6 à 24 atomes de carbone ou des acides aromatiques, lesquels acides ont la forme d'un acide libre ou la forme d'un sel.

8. Câble en acier selon l'une quelconque des revendications 1 à 7, dans lequel le co-inhibiteur de corrosion comprend également

des dérivés du type imidazoline comportant une fraction alkyle en $C_{6-24}$.

9. Câble en acier selon l'une quelconque des revendications 1 à 8, dans lequel le co-inhibiteur de corrosion comprend également

des composés du type anydride (alkyl $C_6$-$C_{24}$) succinique

10. Câble en acier selon la revendication 1, **caractérisé en ce que,** dans ladite composition, le sel de l'acide naphténique est un sel 13-naphténique de baryum.

11. Câble en acier selon l'une quelconque des revendications 8 à 10, **caractérisé en ce que**, dans ladite composition, les dérivés du type imidazoline sont choisis dans le groupe constitué des esters de phosphate et d'imidazoline comportant un groupe alkyle en $C_{6-24}$.

12. Câble en acier selon l'une quelconque des revendications 9 à 12, **caractérisé en ce que**, dans ladite composition, l'anhydride (alkyl $C_{6-24}$) succinique est choisi dans le groupe constitué de l'anhydride undécyl-, dodécyl-, et tridécyl-succinique, ou des mélanges de ceux-ci.

13. Câble en acier selon la revendication 1, **caractérisé en ce que,** dans ladite composition, l'alkylglycol en $C_{1-5}$ est le diéthylèneglycol butylique.

14. Câble en acier selon l'une quelconque des revendications 1 à 13, **caractérisé en ce que** l'ester synthétique présent dans ladite composition est l'ester du néopentylglycol et d'acides gras de coprah.

15. Câble en acier selon l'une quelconque des revendications 1 à 13, **caractérisé en ce que** l'ester synthétique présent dans ladite composition est l'ester du néopentylglycol et d'acides gras techniques en $C_{8-18}$.

16. Câble en acier selon l'une quelconque des revendications 1 à 15, **caractérisé en ce que** l'alcool en $C_{8-16}$ présent dans ladite composition est un alcool technique en $C_{12-13}$.

17. Câble en acier selon l'une quelconque des revendications 1 à 16, **caractérisé en ce que** la couche de revêtement est une couche métallique.

18. Câble en acier selon l'une quelconque des revendications 1 à 17, **caractérisé en ce que** le câble en acier est partiellement recouvert avec la couche de revêtement.

19. Câble en acier selon la revendication 18, **caractérisé en ce que** le câble en acier n'est pas recouvert avec la couche de revêtement à raison de 2 à 25 % en poids.

20. Procédé de fabrication d'un câble en acier résistant à la corrosion, comprenant les étapes consistant :

a) à étirer un fil en acier allongé, jusqu'à un diamètre intermédiaire;
b) à appliquer une couche de revêtement ayant un potentiel d'électrode excédant le potentiel d'électrode de l'acier ou ayant une vitesse de corrosion qui est inférieure à la vitesse de corrosion de l'acier, sur l'objet en acier allongé, de diamètre intermédiaire;
c) à étirer le fil en acier allongé, jusqu'au diamètre final, et
d) à appliquer la composition inhibitrice de la corrosion définie dans les revendications 1 à 16, sur l'objet en acier tréfilé allongé, de diamètre final.

21. Procédé selon la revendication 20, dans lequel deux fils tréfilés allongés, ou plus, sont torsadés en une structure câbleuse avant l'application de la composition inhibitrice de la corrosion.

# Fig-1

# Fig-2